(19) Europäisches Patentamt
European Patent Office
Office européen des brevets

(11) EP 4 542 842 A1

(12) EUROPEAN PATENT APPLICATION
published in accordance with Art. 153(4) EPC

(43) Date of publication:
23.04.2025 Bulletin 2025/17

(51) International Patent Classification (IPC):
H02M 7/49 (2007.01)

(21) Application number: 22947864.9

(52) Cooperative Patent Classification (CPC):
H02M 7/49

(22) Date of filing: 20.06.2022

(86) International application number:
PCT/JP2022/024562

(87) International publication number:
WO 2023/248300 (28.12.2023 Gazette 2023/52)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: MITSUBISHI ELECTRIC
CORPORATION
Chiyoda-ku
Tokyo 100-8310 (JP)

(72) Inventors:
• IDO, Yasunori
Tokyo 100-8310 (JP)
• OHASHI, Hideaki
Tokyo 100-8310 (JP)
• IMADA, Noriyuki
Tokyo 100-8310 (JP)
• OTA, Katsuya
Tokyo 100-8310 (JP)

(74) Representative: Witte, Weller & Partner
Patentanwälte mbB
Postfach 10 54 62
70047 Stuttgart (DE)

(54) ELECTRIC POWER CONVERSION APPARATUS AND CONTROL METHOD THEREFOR

(57) A power conversion device (1) includes a plurality of arms (5, 6) and a control device (3). Each arm (5, 6) includes a plurality of submodules (7) connected in series with each other. The control device (3) controls a bridge circuit of each submodule (7) by phase shift pulse width modulation. An initial phase of a carrier signal for use in the phase shift pulse width modulation in each submodule (7) is set to be different from that of any of other submodules (7). When a period of the carrier signal is dynamically changed, the control device changes a period of the carrier signal at timing when a phase of the carrier signal in each submodule (7) is equal to the initial phase.

FIG.1

EP 4 542 842 A1

**Description**

TECHNICAL FIELD

The present disclosure relates to a power conversion device and a method of controlling the same.

BACKGROUND ART

Modular multilevel converters (MMCs) having a plurality of unit converters connected in cascade are known as typical power conversion devices for self-commutated high voltage direct current (HVDC) transmission. Hereinafter, the unit converters are referred to as "converter cells" or "submodules". The submodules each usually include a bridge circuit having a plurality of switching elements, and a power storage element (typically capacitor) connected in parallel with the bridge circuit.

The switching elements that constitute the bridge circuit in each submodule are controlled on and off by phase shift pulse width modulation (PWM). In phase shift PWM control, the timings of carrier signals respectively output to a plurality of converter cells that constitute the same arm (upper arm or lower arm) are shifted from each other in order to reduce harmonic components. Specifically, for one period ($2\pi$ [rad]) of an arm voltage command value, Kcell initial phase command values are generated for each arm such that the phases are shifted from each other by ($2\pi$/Kcell) [rad] in Kcell converter cells in the same arm (for example, see WO 2021/130911 (PTL 1)).

CITATION LIST

PATENT LITERATURE

PTL 1: WO 2021/130911

SUMMARY OF INVENTION

TECHNICAL PROBLEM

In MMC control, there is a need for dynamically changing a carrier frequency in PWM control without stopping power conversion processing, in accordance with the state of a power system or the situation of control. For example, possible cases include: increasing the carrier frequency in order to increase control response speed in the event of a system fault; and decreasing the carrier frequency in order to reduce the switching frequency of a converter circuit during steady operation.

In dynamically switching the carrier frequency, it is necessary to pay attention so as not to adversely affect the power conversion processing by minimizing carrier waveform distortion. The above conventional technique discloses a method of setting a carrier frequency but neither discloses nor suggests a method of dynamically changing a carrier frequency.

The present disclosure is made in view of the above problem and one of objects of the present disclosure is to provide an MMC-type power conversion device capable of dynamically changing a carrier frequency while preventing adverse effects on power conversion processing. Other objects of the present disclosure will be described in the following embodiments.

SOLUTION TO PROBLEM

According to one embodiment, a power conversion device that performs power conversion between a DC circuit and an AC circuit includes a plurality of arms and a control device. Each of the arms includes a plurality of submodules connected in series with each other. Each of the submodules includes an input/output terminal pair, a bridge circuit having a plurality of switching elements, and a power storage element connected to the input/output terminal pair through the bridge circuit. The control device controls the bridge circuit of each submodule by phase shift pulse width modulation. An initial phase of a carrier signal for use in the phase shift pulse width modulation in each submodule is set to be different from that of any of other submodules. When a period of the carrier signal is dynamically changed, the control device changes a period of the carrier signal at timing when a phase of the carrier signal in each submodule is equal to the initial phase.

ADVANTAGEOUS EFFECTS OF INVENTION

The embodiment above can provide an MMC-type power conversion device capable of dynamically changing a carrier frequency while preventing adverse effects on power conversion processing, because when a period of a carrier signal is changed, a period of a carrier signal is changed at the timing when a phase of the carrier signal in each submodule is equal to the initial phase.

BRIEF DESCRIPTION OF DRAWINGS

Fig. 1 is a schematic configuration diagram of a power conversion device.
Fig. 2 is a block diagram showing an exemplary hardware configuration of a control device.
Fig. 3 is a block diagram showing an exemplary functional configuration of control device 3.
Fig. 4 is a circuit diagram showing an example of a submodule that constitutes each leg circuit in Fig. 1.
Fig. 5 is a block diagram showing an exemplary configuration of individual control unit 28 in Fig. 4.
Fig. 6 is a table showing specific contents of a carrier period command value CR_PRD and a carrier phase command value CR_PHS.
Fig. 7 is a timing chart for explaining the procedure of initially setting a period and an initial phase of a carrier signal.
Fig. 8 is a timing chart for explaining a specific example of change of the period of the carrier signal.
Fig. 9 is a timing chart for explaining the procedure of changing the initial phase of the carrier signal.
Fig. 10 is a flowchart for explaining a method of controlling the power conversion device according to the present disclosure.
Fig. 11 is a flowchart showing details of a step of dynamically changing the period and the initial phase of the carrier signal in Fig. 10.

DESCRIPTION OF EMBODIMENTS

Embodiments of the present invention will be described in detail below with reference to the drawings. Like or corresponding parts are denoted by like reference signs and a description thereof will not be repeated.

First Embodiment

[Configuration of Power Conversion Device]

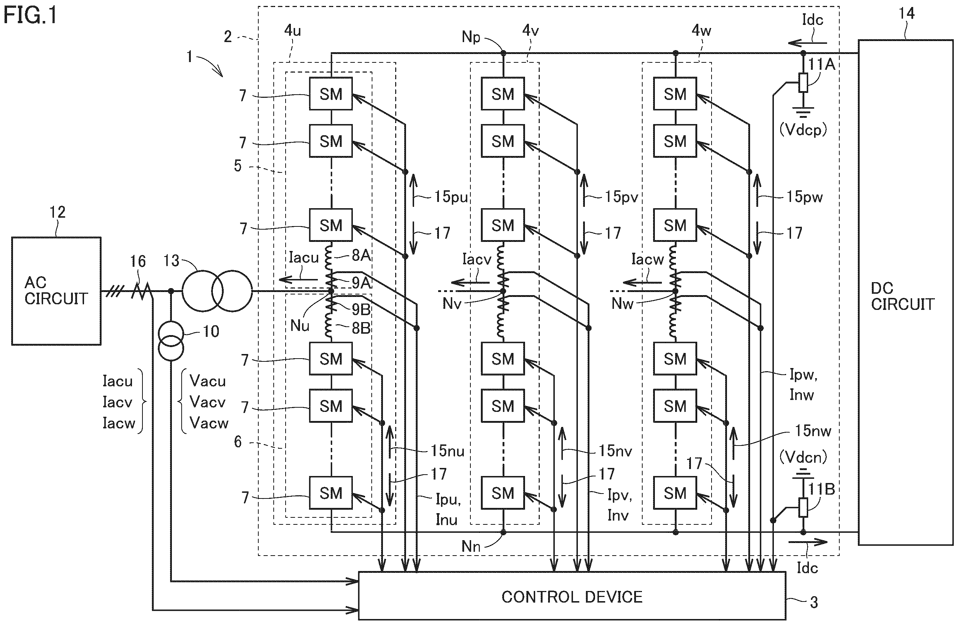

Fig. 1 is a schematic configuration diagram of a power conversion device. Referring to Fig. 1, a power conversion device 1 is configured with a modular multilevel converter including a plurality of submodules (SM) 7 connected in series with each other. Power conversion device 1 performs power conversion between a DC circuit 14 and an AC circuit 12. Specifically, power conversion device 1 includes a power conversion circuit unit 2 and a control device 3.

Power conversion circuit unit 2 includes a plurality of leg circuits 4u, 4v, and 4w (referred to as "leg circuit 4" when they are collectively referred to or any one of them is referred to) connected in parallel with each other between a positive electrode DC terminal (that is, high potential-side DC terminal) Np and a negative electrode DC terminal (that is, low potential-side DC terminal) Nn.

Leg circuit 4 is provided for each of a plurality of phases that constitute alternating current. Leg circuit 4 is connected between AC circuit 12 and DC circuit 14 and performs power conversion between these circuits. Fig. 1 illustrates a case where AC circuit 12 is a three-phase AC system, and three leg circuits 4u, 4v, and 4w are provided respectively corresponding to U phase, V phase, and W phase.

AC input terminals Nu, Nv, and Nw respectively provided for leg circuits 4u, 4v, and 4w are connected to AC circuit 12 through an interconnecting transformer 13. AC circuit 12 is, for example, an AC power system including an AC power source. Fig. 1 does not illustrate the connection of AC input terminals Nv and Nw to interconnecting transformer 13, for simplification of illustration.

High potential-side DC terminal Np and low potential-side DC terminal Nn connected in common to leg circuits 4 are connected to DC circuit 14. DC circuit 14 is, for example, a DC power system including a DC power transmission grid or a DC terminal of another power conversion device. In the latter case, two power conversion devices are coupled to configure a back-to-back (BTB) system for connecting AC power systems different, for example, in rating frequencies.

Instead of using interconnecting transformer 13 in Fig. 1, AC input terminals Nu, Nv, and Nw may be connected to AC circuit 12 through an interconnecting reactor. Furthermore, instead of AC input terminals Nu, Nv, and Nw, leg circuits 4u, 4v, and 4w may be provided with respective primary windings, and leg circuits 4u, 4v, and 4w may be AC connected to interconnecting transformer 13 or the interconnecting reactor through secondary windings magnetically coupled to the primary windings. In this case, the primary windings may be the following reactors 8A and 8B. Specifically, leg circuits 4 are electrically (that is, DC or AC) connected to AC circuit 12 through connections provided for leg circuits 4u, 4v, and 4w, such as AC input terminals Nu, Nv, and Nw or the primary windings.

Leg circuit 4u includes an upper arm 5 from high potential-side DC terminal Np to AC input terminal Nu and a lower arm 6 from low potential-side DC terminal Nn to AC input terminal Nu. AC terminal Nu which is the connection point between upper arm 5 and lower arm 6 is connected to interconnecting transformer 13. High potential-side DC terminal Np and low potential-side DC terminal Nn are connected to DC circuit 14. Leg circuits 4v and 4w have a similar configuration and hereinafter leg circuit 4u will be representatively described.

Upper arm 5 includes a plurality of submodules 7 connected in cascade and reactor 8A. A plurality of submodules 7 and reactor 8A are connected in series with each other.

Similarly, lower arm 6 includes a plurality of submodules 7 connected in cascade and reactor 8B. A plurality of submodules 7 and reactor 8B are connected in series with each other.

Reactor 8A may be inserted at any position in upper arm 5 of leg circuit 4u, and reactor 8B may be inserted at any position in lower arm 6 of leg circuit 4u. A plurality of reactors 8A and a plurality of reactors 8B may be provided. The inductances of the reactors may be different from each other. Only reactor 8A of upper arm 5 or only reactor 8B of lower arm 6 may be provided.

Reactors 8A and 8B are provided to prevent rapid increase of fault current in the event of a fault of AC circuit 12 or DC circuit 14 or the like. However, setting the inductances of reactors 8A and 8B to excessive values reduces the efficiency of the power converter. It is therefore preferable to stop (turn off) all the switching elements in each submodule 7 as briefly as possible in the event of a fault.

Power conversion device 1 further includes an AC voltage detector 10, an AC current detector 16, DC voltage detectors 11A and 11B, and arm current detectors 9A and 9B provided for each leg circuit 4, as detectors for measuring the electrical quantity (current, voltage, etc.) to be used in control.

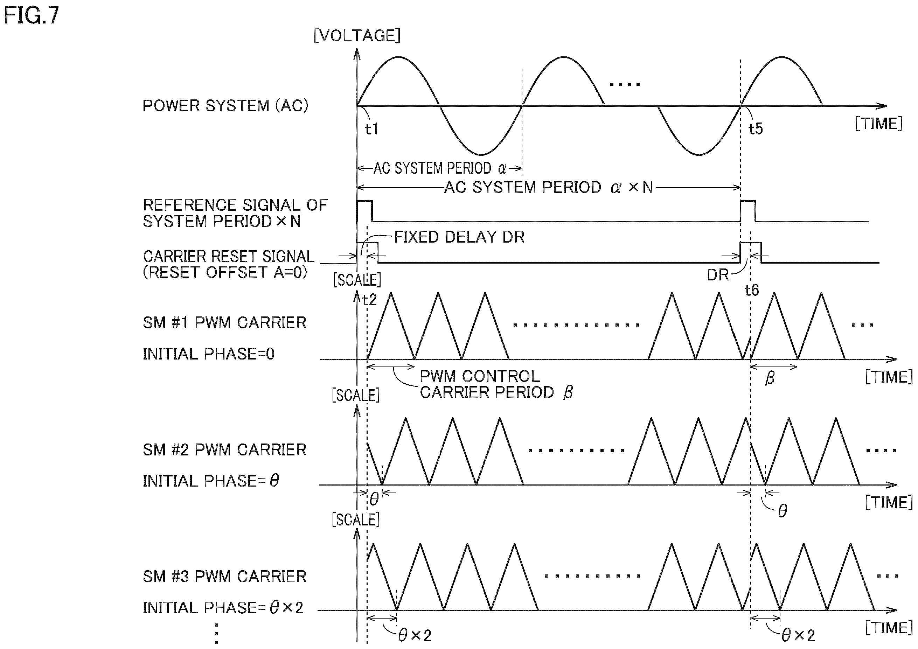

Signals detected by these detectors are input to control device 3. Control device 3 outputs control commands 15pu, 15nu, 15pv, 15nv, 15pw, and 15nw for controlling the operating state of each submodule 7 based on these detection signals. Control device 3 also receives a signal 17 from each submodule 7. Signal 17 includes a detection value of a capacitor voltage (voltage of DC capacitor 24 in Fig. 7 described later) and abnormality determination information indicating the presence or absence of abnormality of submodule 7.

In the present embodiment, control commands 15pu, 15nu, 15pv, 15nv, 15pw, and 15nw are generated respectively corresponding to U phase upper arm, U phase lower arm, V phase upper arm, V phase lower arm, W phase upper arm, and W phase lower arm. In the following description, control commands 15pu, 15nu, 15pv, 15nv, 15pw, and 15nw are denoted as control command 15 when they are collectively referred to or any one of them is referred to.

In Fig. 1, for simplification of illustration, signal lines for signals input from the detectors to control device 3 and signals lines for signals input and output between control device 3 and submodules 7 are partially collectively illustrated, but in actuality the signal lines are provided for each detector and for each submodule 7. Signal lines for transmission and for reception may be separately provided between each submodule 7 and control device 3. In the present embodiment, these signals are transmitted through optical fibers in view of noise immunity.

Each detector will be specifically described below. AC voltage detector 10 detects a U-phase AC voltage value Vacu, a V-phase AC voltage value Vacv, and a W-phase AC voltage value Vacw of AC circuit 12. AC current detector 16 detects a U-phase AC current value Iacu, a V-phase AC current value Iacv, and a W-phase AC current value Iacw of AC circuit 12. DC voltage detector 11A detects a DC voltage value Vdcp at high potential-side DC terminal Np connected to DC circuit 14. DC voltage detector 11B detects a DC voltage value Vdcn at low potential-side DC terminal Nn connected to DC circuit 14.

Arm current detectors 9A and 9B provided in leg circuit 4u for U phase respectively detect upper arm current Ipu flowing through upper arm 5 and lower arm current Inu flowing through lower arm 6. Similarly, arm current detectors 9A and 9B provided in leg circuit 4v for V phase respectively detect upper arm current Ipv and lower arm current Inv. Arm current detectors 9A and 9B provided in leg circuit 4w for W phase respectively detect upper arm current Ipw and lower arm current Inw.

Control device 3 may include a highest-level control device and a plurality of relay devices. The relay devices relay the above control command 15 and signal 17 communicated between the highest-level control device and each submodule 7. In addition, the relay devices may add information to control command 15 and signal 17 or perform supplementary signal processing.

[Hardware Configuration Example of Control Device]

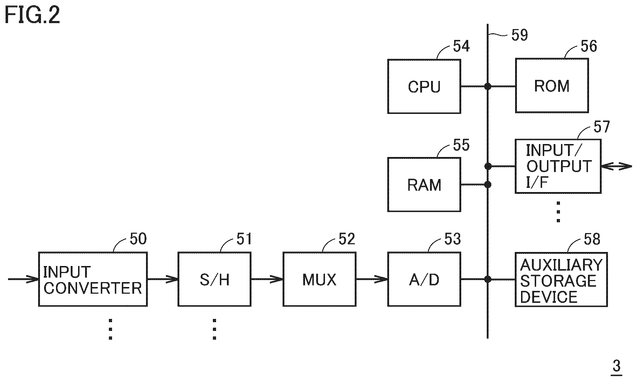

Fig. 2 is a block diagram showing an exemplary hardware configuration of the control device. Fig. 2 illustrates an example in which control device 3 is configured with a computer.

Referring to Fig. 2, control device 3 includes one or more input converters 50, one or more sample and hold (S/H) circuits 51, a multiplexer (MUX) 52, and an analog-to-digital (A/D) converter 53. Control device 3 further includes one or more central processing units (CPU) 54, random access memory (RAM) 55, and read only memory (ROM) 56. Control device 3 further includes one or more input/output interfaces (I/F) 57, an auxiliary storage device 58, and a bus 59 connecting the components above to each other.

Input converter 50 includes an auxiliary transformer (not shown) for each input channel. Each auxiliary transformer converts a detection signal from each electrical quantity detector in Fig. 1 into a signal at a voltage level suitable for subsequent signal processing.

Sample and hold circuit 51 is provided for each input converter 50. Sample and hold circuit 51 samples a signal representing the electrical quantity received from the corresponding input converter 50 at a predetermined sampling frequency and holds the signal.

Multiplexer 52 successively selects the signals held by a plurality of sample and hold circuits 51. A/D converter 53 converts a signal selected by multiplexer 52 into a digital value. A plurality of A/D converters 53 may be provided to perform A/D conversion of detection signals of a plurality of input channels in parallel.

CPU 54 controls the entire control device 3 and performs computational processing under instructions of a program. RAM 55 as a volatile memory and ROM 56 as a nonvolatile memory are used as a main memory of CPU 54. ROM 56 stores a program, setting values for signal processing, and the like. Auxiliary storage device 58 is a nonvolatile memory having a larger capacity than ROM 56 and stores a program, data such as electrical quantity detection values, and the like.

Input/output interface 57 is an interface circuit for communication between CPU 54 and an external device.

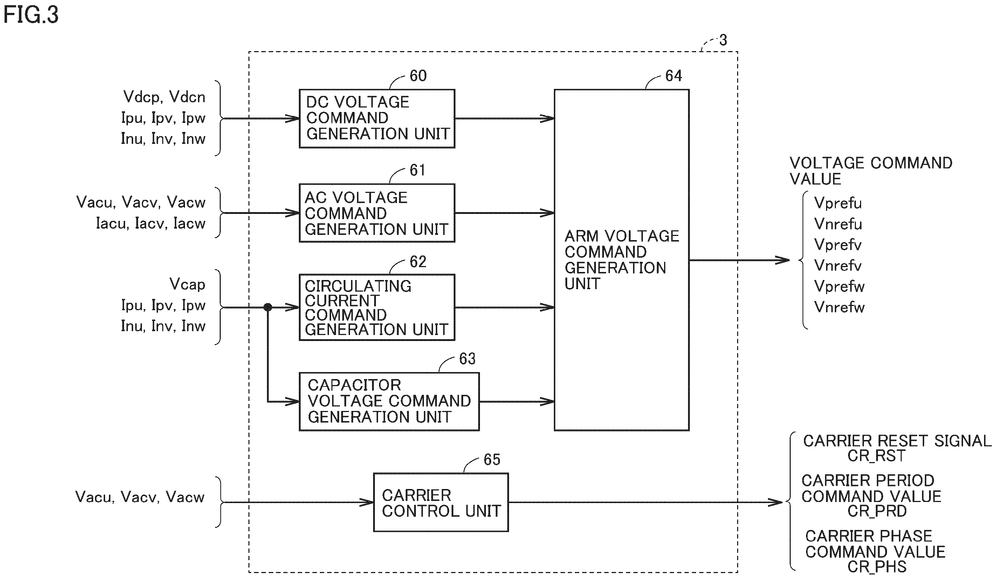

Unlike the example of Fig. 2, at least a part of control device 3 may be configured using circuitry such as a field programmable gate array (FPGA) and an application specific integrated circuit (ASIC). In other words, the function of each functional block illustrated in the following Fig. 3 may be configured based on the computer illustrated in Fig. 2 or may be at least partially configured using circuitry such as FPGA and ASIC. At least a part of the function of each functional block may be configured with an analog circuit.

[Functional Configuration Example of Control Device]

Fig. 3 is a block diagram showing an exemplary functional configuration of control device 3. Referring to Fig. 3, control device 3 functionally includes a DC voltage command generation unit 60, an AC voltage command generation unit 61, a circulating current command generation unit 62, a capacitor voltage command generation unit 63, an arm voltage command generation unit 64, and a carrier control unit 65. These functional blocks are implemented by, for example, CPU 54 in Fig. 2 operating under instructions of a program.

DC voltage command generation unit 60 computes DC current value Idc based on upper arm currents Ipu, Ipv, Ipw and lower arm currents Inu, Inv, Inw of respective phases. Specifically, letting the sum of upper arm currents Ipu, Ipv, and Ipw be Idc_p and the sum of lower arm currents Inu, Inv, and Inw be Idc_n, DC current value Idc can be calculated by

$$Idc=(Idc\_p+Idc\_n)/2 \qquad (1).$$

DC voltage command generation unit 60 generates a DC voltage command value, based on DC voltage values Vdcp and Vdcn detected by DC voltage detectors 11A and 11B, and the calculated DC current value Idc. DC voltage command generation unit 60 is configured with, for example, a feedback controller such as proportional-integral-differential controller (PID controller).

AC voltage command generation unit 61 generates an AC voltage command value for each phase, based on U-phase, V-phase, and W-phase AC voltage values Vacu, Vacv, and Vacw detected by AC voltage detector 10, and U-phase, V-phase, and W-phase AC current values Iacu, Iacv, and Iacw detected by AC current detector 16. AC voltage command generation unit 61 is configured with, for example, a feedback controller such as PID controller.

Circulating current command generation unit 62 first calculates circulating currents Iccu, Iccv, and Iccw respectively flowing through leg circuits 4u, 4v, and 4w based on upper arm currents Ipu, Ipv, and Ipw and lower arm currents Inu, Inv, and Inw of respective phases. The circulating current is current circulating between a plurality of leg circuits 4. For example, circulating current Iccu flowing through U-phase leg circuit 4u can be calculated by

$$Iccu=(Ipu+Inu)/2-Idc/3 \qquad (2).$$

The first term in Equation (2) represents current flowing in common through upper arm 5 and lower arm 6 of leg circuit 4u. The second term in Equation (2) represents the allocation of U-phase leg circuit 4u when it is assumed that DC current value Idc evenly flows through each leg circuit. Circulating currents Iccv and Iccw can also be calculated similarly.

Circulating current command generation unit 62 calculates a command value of circulating current for each phase, based on the calculated circulating currents Iccu, Iccv, and Iccw of respective phases and capacitor voltage Vcap averaged for each arm circuit. Circulating current command generation unit 62 is configured with, for example, a feedback controller such as PID controller.

Capacitor voltage command generation unit 63 generates a voltage command value for a DC capacitor in each submodule 7, based on capacitor voltage Vcap averaged for each arm circuit, and upper arm currents Ipu, Ipv, Ipw and lower arm currents Inu, Inv, Inw of respective phases. Capacitor voltage command generation unit 63 is configured with, for example, a feedback controller such as PID controller.

Arm voltage command generation unit 64 combines the command generation units to generate arm voltage command values Vprefu, Vnrefu, Vprefv, Vnrefv, Vprefw, and Vnrefw for upper arms 5 and lower arms 6 of respective phases. Arm voltage command values Vprefu, Vnrefu, Vprefv, Vnrefv, Vprefw, and Vnrefw of respective phases are transmitted as voltage commands to submodules 7 of respective phases. In the following description, arm voltage command values may be simply referred to as arm voltage command values Vpref and Vnref unless any phase is specified.

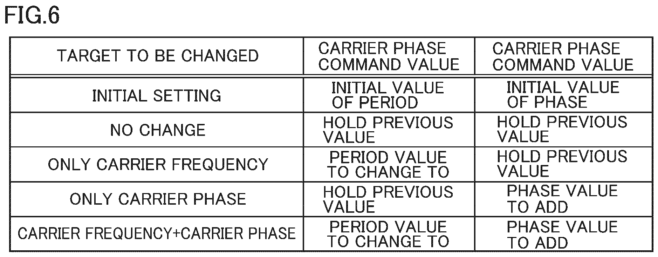

Carrier control unit 65 outputs command values (that is, carrier period command value CR_PRD, carrier phase command value CR_PHS) for a period and a phase of a carrier signal for use in phase shift PWM control executed in each submodule 7. Furthermore, carrier control unit 65 generates a reference pulse signal (that is, carrier reset signal CR_RST) representing the timing of the phase origin of the carrier signal, based on zero points of AC voltages Vacu, Vacv, and Vacw of respective phases. The detailed operation of carrier control unit 65 will be described later with reference to Fig. 6 to Fig. 8.

It is noted that the functional configuration of control device 3 described above is only an example, and a control device having any other configuration can be applied to the present embodiment.

[Configuration Example of Submodule]

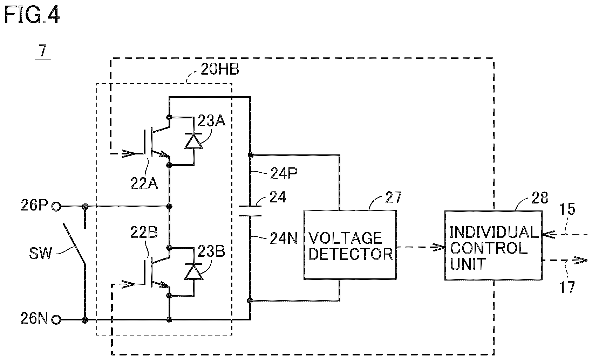

Fig. 4 is a circuit diagram showing an example of a submodule that constitutes each leg circuit in Fig. 1. Submodule 7 shown in Fig. 4 includes a half bridge-type conversion circuit 20HB, a DC capacitor 24 serving as a power storage element, a voltage detector 27, and an individual control unit 28. Conversion circuit 20HB is also referred to as bridge circuit 20HB.

Half bridge-type conversion circuit 20HB includes switching elements 22A and 22B connected in series with each other, and diodes 23A and 23B. Diodes 23A and 23B are connected in anti-parallel (that is, in parallel and in reverse bias direction) with switching elements 22A and 22B, respectively. DC capacitor 24 is connected in parallel with the series connection circuit of switching elements 22A and 22B and holds a DC voltage. The connection node of switching elements 22A and 22B is connected to a high potential-side input/output terminal 26P. The connection node of switching element 22B and DC capacitor 24 is connected to a low potential-side input/output terminal 26N.

Typically, input/output terminal 26P is connected to input/output terminal 26N of submodule 7 adjacent on the positive electrode side. Input/output terminal 26N is connected to input/output terminal 26P of submodule 7 adjacent on the negative electrode side.

Turn-off switching elements capable of controlling both the on operation and the off operation are used for switching elements 22A and 22B. Switching elements 22A and 22B are, for example, insulated gate bipolar transistors (IGBTs) or gate commutated turn-off thyristors (GCTs).

The conversion circuit of submodule 7 is not limited to half bridge-type conversion circuit 20HB as described above. For example, submodule 7 may be configured using a full bridge-type conversion circuit or a three quarter bridge-type conversion circuit.

A bypass switch SW is connected between input/output terminals 26P and 26N. Bypass switch SW is a switch configured to short-circuit both ends of switching element 22B by closing a contact and can allow fault current to pass. In other words, bypass switch SW short-circuits submodule 7 to protect each element (switching elements 22A and 22B, diodes 23A and 23B, and DC capacitor 24) included in submodule 7 from overcurrent that occurs in the event of a fault.

Bypass switch SW is also used to short-circuit submodule 7 when each element in this submodule 7 is failed. With this configuration, even when any submodule 7 among a plurality of submodules 7 is failed, the other submodules 7 can be used to allow power conversion device 1 to continue the operation.

Voltage detector 27 detects a voltage between both ends 24P and 24N (that is, capacitor voltage) of DC capacitor 24.

Individual control unit 28 generates a gate signal for controlling on and off of switching elements 22A and 22B in accordance with phase shift PWM control, based on control command 15 received from control device 3. Individual control unit 28 further transmits signal 17 including the abnormality determination information of submodule 7 and the capacitor voltage detected by voltage detector 27 to control device 3.

Typically, individual control unit 28 performs control to bring one of switching elements 22A and 22B to the on state and the other to the off state during normal operation (that is, when zero voltage or a positive voltage is output between input/output terminals 26P and 26N). When switching element 22A is in the on state and switching element 22B is in the off state, the voltage between both ends of DC capacitor 24 is applied between input/output terminals 26P and 26N. Conversely, when switching element 22A is in the off state and switching element 22B is in the on state, the voltage between input/output terminals 26P and 26N is 0 V.

Submodule 7 can output zero voltage or a positive voltage dependent on the voltage of DC capacitor 24 by alternately bringing switching elements 22A and 22B to the on state. Diodes 23A and 23B are provided for protection when a reverse voltage is applied to switching elements 22A and 22B.

The above individual control unit 28 may be configured with a dedicated circuit or may be configured using a FPGA.

The above individual control unit 28 may be provided inside control device 3, and a gate signal may be transmitted from each individual control unit 28 to the corresponding submodule 7 through an optical fiber. In this case, each individual control unit 28 provided inside control device 3 receives, from the corresponding submodule 7, signal 17 including the abnormality determination information of submodule 7 and the capacitor voltage detected by voltage detector 27, through an optical fiber.

[Functional Configuration Example of Individual Control Unit]

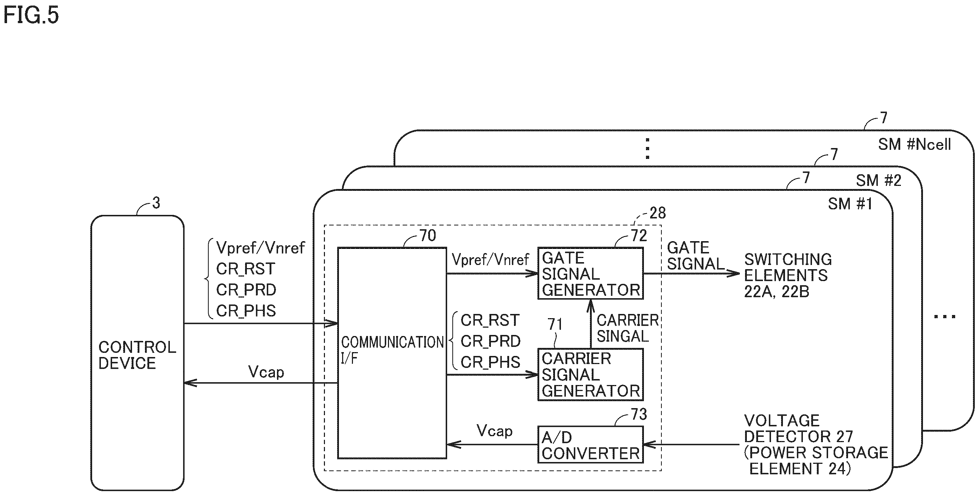

Fig. 5 is a block diagram showing an exemplary configuration of individual control unit 28 in Fig. 4. Referring to Fig. 5, individual control unit 28 provided for each submodule 7 includes a communication interface (I/F) 70, a carrier signal generator 71, a gate signal generator 72, and an A/D converter 73.

Communication interface 70 of each submodule 7 receives arm voltage command value Vpref or Vnref, carrier reset signal CR_RST, carrier period command value CR_PRD, and carrier phase command value CR_PHS as control command 15 from control device 3. Communication interface 70 transfers the received arm voltage command value Vpref or Vnref to gate signal generator 72, and transfers the received carrier reset signal CR_RST, carrier period command value CR_PRD, and carrier phase command value CR_PHS to carrier signal generator 71.

Carrier signal generator 71 generates, for example, a triangular wave as a carrier signal for use in phase shift PWM control. Specifically, carrier signal generator 71 generates a carrier signal having a period based on carrier period command value CR_PRD and having a phase based on carrier phase command value CR_PHS, in synchronization with carrier reset signal CR_RST. When the period and the phase of the carrier signal are to be changed, the contents of carrier period command value CR_PRD and carrier phase command value CR_PHS are changed.

Gate signal generator 72 generates a gate signal, based on the comparison between arm voltage command value Vpref or Vnref and the carrier signal generated by carrier signal generator 71. Gate signal generator 72 supplies the generated gate signal to the gates of switching elements 22A and 22B.

Specifically, gate signal generator 72 generates a gate signal of high level when arm voltage command value Vpref or Vnref is equal to or greater than the value of the carrier signal, and generates a gate signal of low level when arm voltage command value Vpref or Vnref is smaller than the value of the carrier signal.

A/D converter 73 generates a digital value by A/D conversion of the voltage value of DC capacitor 24 detected by voltage detector 27. A/D converter 73 transmits the resulting digital value of capacitor voltage Vcap to control device 3 through communication interface 70.

Fig. 6 is a table showing specific contents of carrier period command value CR_PRD and carrier phase command value CR_PHS.

Referring to Fig. 6, at the time of initial setting, an initial value $\beta$ of the carrier period is set as carrier period command value CR_PRD, and a value $\gamma$ of the initial phase is set as carrier phase command value CR_PHS. The initial value $\beta$ of the carrier period is selected such that an integer multiple (M) of the initial value $\beta$ is equal to an integer multiple (N) of a period $\alpha$ of the AC system, that is, $\beta \times M = \alpha \times N$.

The value $\gamma$ of the initial phase is set such that the initial phases of carrier signals respectively output to a plurality of converter cells that constitute the same arm (upper arm or lower arm) are different from each other. Specifically, the number of submodules 7 provided in each arm is denoted as Kcell, and it is assumed that the carrier period $\beta$ corresponds to phase $2\pi$ [rad]. In this case, a unit phase shift amount $\theta$ is represented by

$$\theta = 2\pi/\text{Kcell (where } 2\pi \text{ corresponds to carrier period } \beta) \qquad (3).$$

Therefore, the initial phase $\gamma$ of the carrier signal in the ith ($1 \leq i \leq \text{Kcell}$) submodule 7 provided in each arm is represented by

$$\gamma = (i-1) \times \theta \qquad (4).$$

The value of the initial phase $\gamma$ is allocated as carrier phase command value CR_PHS to the ith submodule 7 of each arm.

When the period and the phase of the carrier signal are not to be changed, carrier period command value CR_PRD and carrier phase command value CR_PHS are held at respective previous values.

On the other hand, when the period of the carrier signal is changed, a period value β' to change to is set as carrier period command value CR_PRD. In this case, the carrier period β' is selected such that an integer multiple (M') of the carrier period β' after change is equal to an integer multiple (N) of period α of the AC system, that is, such that β'×M'=β×M=α×N is satisfied.

To facilitate selection of a carrier period, a plurality of carrier period candidates may be determined in advance, and a common multiple of these carrier period candidates β0, β1, β2, ... and the system period α may be determined as a period (α×N) of carrier reset signal CR_RST. In this case, when N, M0, M1, M2, ... are integers equal to or greater than 2,

$$\alpha \times N = \beta 0 \times M0 = \beta 1 \times M1 = \beta 2 \times M2 = \ldots \qquad (5)$$

holds.

When the initial phase of the carrier signal is changed, an adjustment value δ is added to the initial phase γ of the carrier signal that is initially set. The adjustment value δ is transmitted as carrier phase command value CR_PHS to each submodule 7. Specific examples of the method of changing the initial phase will be described in the second embodiment.

[Specific Example of Initial Setting of Period and Initial Phase of Carrier Signal]

Fig. 7 is a timing chart for explaining the procedure of initially setting the period and the initial phase of a carrier signal.

Referring to Fig. 7, control device 3 (carrier control unit 65) generates a reference signal having a period of N multiple of period α of the AC system and synchronized with AC voltage of each phase of the power system. At time t1 and time t4 corresponding to a rising edge of the reference signal, the voltage phase of the corresponding phase of the AC system is zero.

Furthermore, control device 3 generates carrier reset signal CR_RST lagging behind the reference signal by a reset offset time A (also simply referred to as offset time A). Control device 3 then transmits carrier reset signal CR_RST as well as carrier period command value CR_PRD and carrier phase command value CR_PHS to each submodule 7, at time t2 which is the timing of a rising edge of carrier reset signal CR_RST. As shown in Fig. 7, reset offset time A is normally zero at the time of initial setting but may be set to any value other than zero.

In response to carrier reset signal CR_RST, carrier signal generator 71 of each submodule 7 starts outputting the carrier signal having a period and a phase based on the above command value, at time t2 when a certain fixed delay time DR has passed since the rising time t1 of carrier reset signal CR_RST. Fixed delay time DR is a certain time determined by communication delay and control processing time in each submodule 7.

In the example specifically shown in Fig. 7, the initial phase of the carrier signal generated in submodule SM#1 is zero. The initial phase of the carrier signal generated in submodule SM#2 is θ. The initial phase of the carrier signal generated in submodule SM#3 is 2×θ. At time t2, the values shifted from the phase origin (in Fig. 7, at the valley of the triangular wave) of the carrier signal by these initial phases are output as carrier signals.

In the example shown in Fig. 7, the initial phases of the carrier signals for use in submodules SM#2 and SM#3 are shifted in the negative direction from the initial phase of the carrier signal for use in submodule SM#1. Conversely, the initial phases of the carrier signals for use in submodules SM#2 and SM#3 may be shifted in the positive direction from the initial phase of the carrier signal for use in submodule SM#1.

At time t5 when N multiple of the period α (α×N) of the AC system has passed since time t1, the reference signal rises again. Since the offset time A is zero in the example shown in Fig. 7, carrier reset signal CR_RST also rises again at time t5 when the reference signal rises. At time t5, control device 3 transmits carrier reset signal CR_RST as well as carrier period command value CR_PRD and carrier phase command value CR_PHS to each submodule 7. Here, carrier period command value CR_PRD and carrier phase command value CR_PHS are held at the previous values. The period of carrier reset signal CR_RST is α×N which is the same as that of the reference signal.

Carrier signal generator 71 of each submodule 7 resets the phase of the carrier signal to the initial phase γ at time t6 when a certain fixed delay time DR has passed since time t5. Accordingly, synchronization with AC voltage of the AC system, tracking of system frequency fluctuations, and elimination of accumulation of clock errors for each submodule are performed without changing the frequency of the carrier signal.

[Specific Example of Change of Period of Carrier Signal]

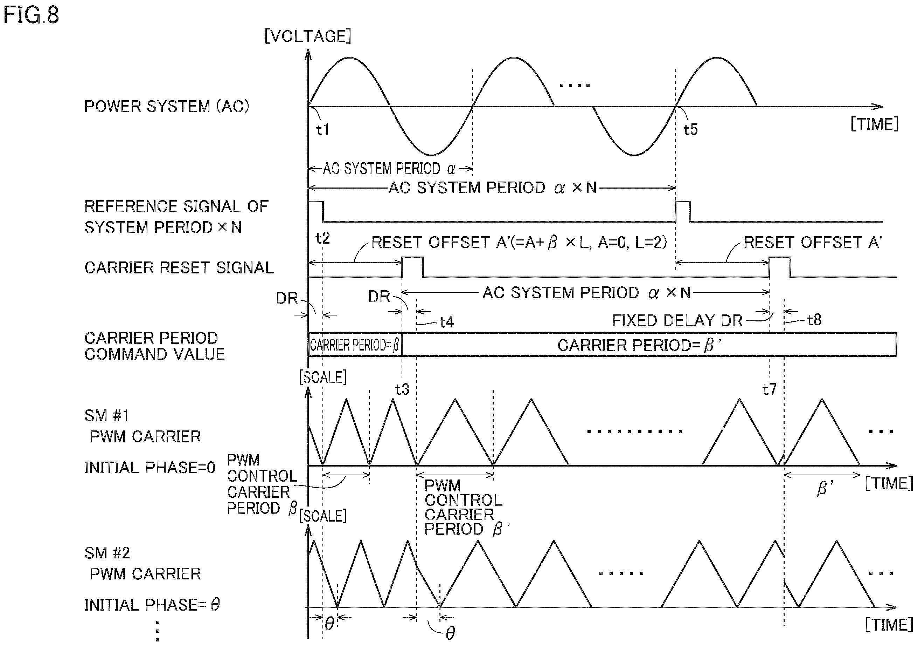

Fig. 8 is a timing chart for explaining a specific example of change of the period of the carrier signal. Fig. 8 shows an example in which the carrier period is changed from β to β'. When N, M, and M' are integers equal to or greater than 2, and the system frequency is α, α×N=β×M=β'×M' holds.

Referring to Fig. 8, control device 3 (carrier control unit 65) generates a reference signal having a period of N multiple of period α of the AC system and synchronized with AC voltage of each phase of the power system. At time t1 and time t5 corresponding to a rising edge of the reference signal, the voltage phase of the corresponding phase of the AC system is zero. As described with reference to Fig. 7, since the offset time A before changing the carrier period β is zero, the phase of each carrier signal becomes the initial phase γ at time t2 lagging behind time t1 by fixed delay time DR.

When the carrier period is changed, control device 3 generates carrier reset signal CR_RST lagging behind the reference signal by a new offset time A. Here, letting the offset time before change be A, the carrier period before change be β, and L be an integer, the new offset time A' is set to

$$A'=A+\beta\times L \qquad (6).$$

In the example shown in Fig. 8, the offset time A before change is zero, and L=2. By setting the difference in offset time (that is, A'-A) to an integer multiple of the carrier period β, the carrier period can be switched at the timing when the phase of each carrier signal becomes the initial phase γ.

Specifically, control device 3 transmits carrier reset signal CR_RST as well as carrier period command value CR_PRD and carrier phase command value CR_PHS to each submodule 7, at time t3 which is the timing of a rising edge of carrier reset signal CR_RST having the offset time A'. Carrier period command value CR_PRD is the carrier period β' to change to, and carrier phase command value CR_PHS remains the previous value (initial phase γ) and is not changed.

In response to carrier reset signal CR_RST, carrier signal generator 71 of each submodule 7 changes the carrier period from β to β' at time t4 when a certain fixed delay time DR has passed since time t3. Since time t4 is the time when an integer multiple (in Fig. 8, twice) of the carrier period β has passed since time t2, the phase of each carrier signal becomes the initial phase γ at time t4.

As described above, since the carrier period is changed at the timing when the phase of each carrier signal becomes the initial phase γ, basically, the carrier signal changes continuously without skips. Further, since the offset time A' can be selected at the timing when the carrier signal becomes the initial phase, the carrier period can be changed with a short delay time. For example, when a failure occurs in the power system, a carrier reset signal is issued by setting the offset time A' at closest timing when the carrier signal becomes the initial phase, without waiting for the next carrier reset signal, whereby the carrier period can be changed to a shorter value with a short delay time.

At time t5 when N multiple of the period α (α×N) of the AC system has passed since time t1, the reference signal rises again. At time t7 when the above offset time A' has passed since time t5, control device 3 outputs carrier reset signal CR_RST as well as carrier period command value CR_PRD and carrier phase command value CR_PHS to each submodule 7. Here, carrier period command value CR_PRD and carrier phase command value CR_PHS are held at the previous values. It is noted that the period of carrier reset signal CR_RST is α×N which is the same as that of the reference signal.

Carrier signal generator 71 of each submodule 7 resets the phase of the carrier signal to the initial phase γ at time t8 when a certain fixed delay time DR has passed since time t7. Accordingly, synchronization with AC voltage of the AC system, tracking of system frequency fluctuations, and elimination of accumulation of clock errors for each submodule are performed while the period of the carrier signal keeps the period β' after change.

In the example shown in Fig. 8, the initial phases of the carrier signals for use in submodules SM#2 and SM#3 are shifted in the negative direction from the initial phase of the carrier signal for use in submodule SM#1. Conversely, the initial phases of the carrier signals for use in submodules SM#2 and SM#3 may be shifted in the positive direction from the initial phase of the carrier signal for use in submodule SM#1.

[Effect of First Embodiment]

As described above, in the power conversion device of the first embodiment, the period of the carrier signal is changed at the timing when the phase of the carrier signal becomes the initial phase. With this configuration, the carrier period can be dynamically changed while preventing adverse effects on power conversion processing by minimizing distortion of the carrier waveform. As a result, the carrier frequency suitable for the situation of the power system and the control situation can be selected. For example, possible operation implementations include: increasing the carrier frequency in order to increase control response speed in the event of a system fault; and decreasing the carrier frequency in order to reduce the switching frequency of a converter circuit during steady operation.

Second Embodiment

In the MMC-type power conversion device, it is necessary to keep the voltage of the power storage element of each submodule to around a target value in order to obtain desired control output. However, in phase shift PWM control, voltage is accumulated in the power storage element of a particular submodule depending on operating states, so that the voltage balance between submodules may become uneven. It is known to dynamically change the initial phase of the carrier signal of each submodule in order to eliminate such uneven voltage balance. Hereinafter, the procedure of dynamically changing the initial phase of the carrier signal will be described.

[Specific Example of Change of Initial Phase of Carrier Signal]

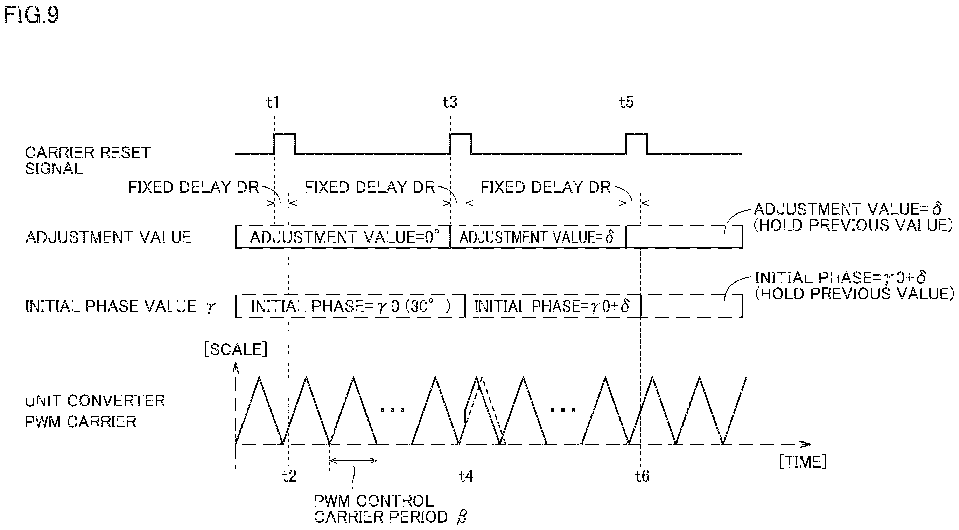

Fig. 9 is a timing chart for explaining the procedure of changing the initial phase of the carrier signal.

In the example of Fig. 9, change of the initial phase $\gamma$ is executed at timing synchronized with the present carrier reset signal CR_RST (specifically, the timing of a rising edge). However, change of the initial phase $\gamma$ is not necessarily executed every time. For example, in Fig. 9, at time t1, t3, t5, carrier reset signal CR_RST rises, but change of the initial phase is not executed at time t1, t5, and change of the initial phase $\gamma$ is executed at time t3. At any time t1, t3, t5, the offset time for the reference signal is not changed.

Unlike the above, the offset time may be changed simultaneously with the change of the initial phase $\gamma$. In this case, letting the offset time before changing the initial phase $\gamma$ be A, and the offset time after changing the initial phase $\gamma$ be A', the difference in offset time (that is, A'-A) is set to an integer multiple of the carrier period $\beta$, in the same manner as in the first embodiment. Accordingly, the initial phase $\gamma$ is updated at any timing when the period of the carrier signal becomes the initial phase.

In the second embodiment, the initial phase $\gamma$ of the carrier signal is generated by adding an adjustment value $\delta$ to a fixed value $\gamma0$. As represented by the above Equation (4), the fixed value $\gamma0$ is determined by the number of submodules Kcell for each arm and ID (for example, number i in Equation (4)) of each submodule. The adjustment value $\delta$ is a value common to each submodule. For example, the initial phase $\gamma$ of the ith (1≤i≤Kcell) submodule is represented by

$$\gamma = \gamma0 += (i-1) \times \theta \qquad (7)$$

using the unit phase shift amount $\theta$ represented by Equation (3).

As represented by Equation (7) above, when the initial phases $\gamma$ of Kcell submodules 7 that constitute each arm are changed, the initial phases $\gamma$ are changed at once by the adjustment value $\delta$. Setting the adjustment value $\delta$ to a relatively small value (for example, a value smaller than $\theta$) can minimize distortion of the carrier frequency and prevent adverse effects on the power conversion processing while dynamically changing the initial phase of the carrier signal.

Specifically, at time t1 in Fig. 9, control device 3 (carrier control unit 65) transmits carrier reset signal CR_RST as well as carrier period command value CR_PRD and carrier phase command value CR_PHS to each submodule 7. Carrier period command value CR_PRD and carrier phase command value CR_PHS are held at the previous values. That is, the adjustment value of the initial phase is 0 degrees and the initial phase $\gamma$ is equal to the fixed value $\gamma0$ (for example, 30 degrees). The carrier period $\beta$ is also not changed.

At time t2 when a certain fixed delay time DR has passed since time t1, carrier signal generator 71 of each submodule 7 resets the phase of the carrier signal to the present initial phase $\gamma$. Accordingly, synchronization with AC voltage of the AC system, tracking of system frequency fluctuations, and elimination of accumulation of clock errors for each submodule are performed without changing the period $\beta$ and the initial phase $\gamma$ of the carrier signal.

At time t3 when the period ($\alpha \times N$) of carrier rest signal CR_RST has passed since time t1, control device 3 (carrier control unit 65) transmits carrier reset signal CR_RST as well as carrier period command value CR_PRD and carrier phase command value CR_PHS to each submodule 7. Carrier period command value CR_PRD is held at the previous value, whereas $\delta$ is designated as an adjustment value for carrier phase command value CR_PHS. The initial phase $\gamma$ is thus changed from $\gamma0$ to $\gamma0+\delta$.

At time t4 when a certain fixed delay time DR has passed since time t3, carrier signal generator 71 of each submodule 7 shifts the initial phase from the fixed value $\gamma0$ by the adjustment value $\delta$. The carrier period $\beta$ is not changed.

At time t5 when the period ($\alpha \times N$) of carrier rest signal CR_RST has passed since time t3, control device 3 (carrier control unit 65) transmits carrier reset signal CR_RST as well as carrier period command value CR_PRD and carrier phase command value CR_PHS to each submodule 7. Carrier period command value CR_PRD and carrier phase command value CR_PHS are held at the previous values. The adjustment value of the initial phase remains $\delta$ and not changed.

At time t6 when a certain fixed delay time DR has passed since time t5, carrier signal generator 71 of each submodule 7 resets the phase of the carrier signal to the present initial phase $\gamma$ (=$\gamma0+\delta$). Accordingly, synchronization with AC voltage of the AC system, tracking of system frequency fluctuations, and elimination of accumulation of clock errors for each submodule are performed without changing the period $\beta$ and the initial phase $\gamma$ of the carrier signal.

Fig. 9 illustrates an example in which the initial phase $\gamma$ is shifted in the positive direction, but the initial phase $\gamma$ may be shifted in the negative direction.

[Effect of Second Embodiment]

As described above, in the power conversion device of the second embodiment, the initial phase of the carrier signal is changed at the timing when the phase of the carrier signal becomes the initial phase. In particular, in the second embodiment, the initial phases $\gamma$ of the submodules are changed at once by the same adjustment value $\delta$. Setting the adjustment value $\delta$ to a relatively small value can minimize distortion of the carrier frequency and prevent adverse effects on the power conversion processing while dynamically changing the initial phase of the carrier signal. As a result, it is possible to eliminate the uneven balance of capacitor voltage between submodules which occurs if the initial phase of the carrier signal is fixed.

The foregoing first and second embodiments can be carried out in combination.

[Overview of First and Second Embodiments]

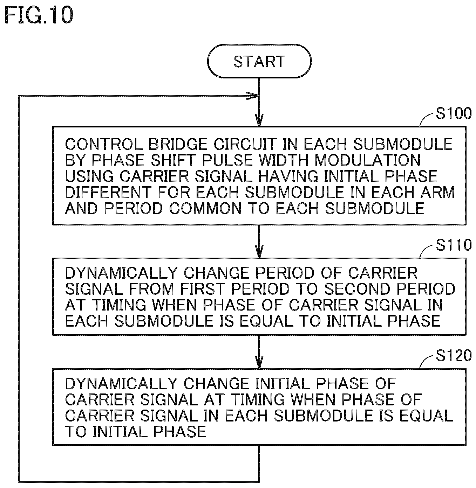

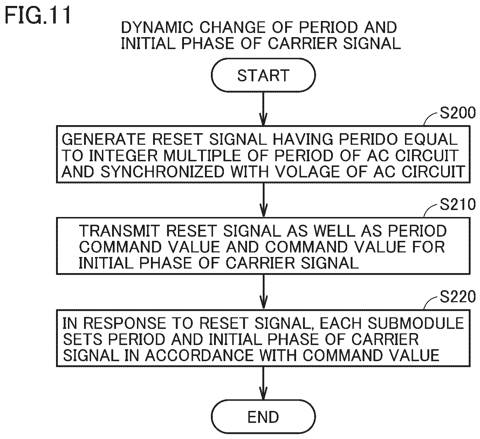

Hereinafter, referring to the flowcharts in Fig. 10 and Fig. 11, a method of controlling the power conversion device in the present disclosure will be summarized.

Fig. 10 is a flowchart for explaining a method of controlling the power conversion device according to the present disclosure. At step S100 in Fig. 10, control device 3 controls bridge circuit 20HB of each submodule 7 by phase shift pulse width modulation, using a carrier signal having an initial phase $\gamma$ that is different for each submodule 7 in each arm 5, 6 and a first period $\beta$ that is common to each submodule 7.

At the next step S110, control device 3 dynamically changes the period of the carrier signal from the first period $\beta$ to a second period $\beta'$ at the timing when the phase of the carrier signal in each submodule 7 is equal to the initial phase. Here, a common multiple of the first period $\beta$ and the second period $\beta'$ is equal to an integer multiple (N) of the period $\alpha$ of voltage of AC circuit 12.

At the next step S120, control device 3 dynamically changes the initial phase of the carrier signal to a new value at the timing when the phase of the carrier signal in each submodule 7 is equal to the initial phase. Here, when the initial phase y is dynamically changed, the adjustment value $\delta$ common among a plurality of submodules is added to the initial phase $\gamma 0$ initially set for each submodule 7.

Subsequently, the process returns to step S100, and control of bridge circuit 20HB is executed using the period and the initial phase of the carrier signal newly set.

Fig. 11 is a flowchart showing details of a step of dynamically changing the period and the initial phase of the carrier signal in Fig. 10.

First of all, at step S200, control device 3 generates reset signal CR_RST having a period equal to an integer multiple (N) of the period $\alpha$ of voltage of AC circuit 12 and synchronized with the voltage of AC circuit 12.

At the next step S210, control device 3 transmits reset signal CR_RST as well as carrier signal period command value CR_PRD and initial phase command value CR_PHS to each submodule 7.

At the next step S220, in response to reset signal CR_RST, each submodule 7 sets the period and the initial phase of the carrier signal in accordance with the above command values. Here, when the received period command value and initial phase command value are held at previous values, each submodule 7 resets the carrier signal in response to the reset signal.

Embodiments disclosed here should be understood as being illustrative rather than being limitative in all respects. The scope of the subject application is shown not in the foregoing description but in the claims, and it is intended that all modifications that come within the meaning and range of equivalence to the claims are embraced here.

REFERENCE SIGNS LIST

1 power conversion device, 2 power conversion circuit unit, 3 control device, 4 leg circuit, 5 upper arm, 6 lower arm, 7, SM submodule, 8A, 8B reactor, 9A, 9B arm current detector, 10 AC voltage detector, 11A, 11B DC voltage detector, 12 AC circuit, 13 interconnecting transformer, 14 DC circuit, 15 control command, 16 AC current detector, 17 signal, 20HB conversion circuit (bridge circuit ), 22A, 22B switching element, 23A, 23B diode, 24 DC capacitor, 26N, 26P input/output terminal, 27 voltage detector, 28 individual control unit, 50 input converter, 51 sample and hold circuit, 52 multiplexer, 53, 73 A/D converter, 54 CPU, 55 RAM, 56 ROM, 57 input/output interface, 58 auxiliary storage device, 59 bus, 60 DC voltage command generation unit, 61 AC voltage command generation unit, 62 circulating current command generation unit, 63 capacitor voltage command generation unit, 64 arm voltage command generation unit, 65 carrier control unit, 70 communication interface, 71 carrier signal generator, 72 gate signal generator, A offset time, CR_RST carrier reset signal, CR_PRD carrier period command value, CR_PHS carrier phase command value, DR fixed delay time, Kcell the number of submodules, Nn low potential-side DC terminal, Np high potential-side DC terminal, Nu, Nv, Nw AC input terminal.

**Claims**

1. A power conversion device to perform power conversion between a DC circuit and an AC circuit, the power conversion device comprising:

   a plurality of arms; and
   a control device,
   each of the arms including a plurality of submodules connected in series with each other,
   each of the submodules including:

   an input/output terminal pair;
   a bridge circuit including a plurality of switching elements; and
   a power storage element connected to the input/output terminal pair through the bridge circuit, wherein

   the control device controls the bridge circuit of each submodule by phase shift pulse width modulation, and an initial phase of a carrier signal for use in the phase shift pulse width modulation in each submodule is set to be different from an initial phase of a carrier signal of any of other submodules, and
   when a period of the carrier signal is dynamically changed, the control device changes a period of the carrier signal at timing when a phase of the carrier signal in each submodule is equal to the initial phase.

2. The power conversion device according to claim 1, wherein when the initial phase of the carrier signal is dynamically changed, the control device changes the initial phase of the carrier signal at timing when a phase of the carrier signal in each submodule is equal to the initial phase before change.

3. The power conversion device according to claim 2, wherein when the initial phase of the carrier signal is dynamically changed, the control device changes the initial phase by adding an adjustment value common among the submodules to an initial phase initially set for each of the submodules.

4. The power conversion device according to claim 2 or 3, wherein when a period of the carrier signal is changed from a first period to a second period, a common multiple of the first period and the second period is equal to an integer multiple of a period of voltage of the AC circuit.

5. The power conversion device according to claim 4, wherein

   the control device generates a reset signal having a period equal to the integer multiple of the period of the AC circuit and synchronized with voltage of the AC circuit, and transmits the reset signal as well as command values for a period and an initial phase of the carrier signal to each submodule, and
   in response to the reset signal, each submodule sets the period and the initial phase of the carrier signal in accordance with the command values.

6. The power conversion device according to claim 5, wherein when the received command value for the period and the received command value for the initial phase are held at previous values, each submodule resets the carrier signal in response to the reset signal.

7. A method of controlling a power conversion device to perform power conversion between a DC circuit and an AC circuit,

   the power conversion device including a plurality of arms,
   each of the arms including a plurality of submodules connected in series with each other,
   each of the submodules including:

   an input/output terminal pair;
   a bridge circuit including a plurality of switching elements; and
   a power storage element connected to the input/output terminal pair through the bridge circuit,

   the method comprising steps of:

   controlling the bridge circuit of each submodule by phase shift pulse width modulation, using a carrier signal having an initial phase different for each of the submodules of each arm and having a first period common to each submodule; and
dynamically changing a period of the carrier signal from the first period to a second period, at timing when a phase of the carrier signal in each submodule is equal to the initial phase.

8. The method of controlling a power conversion device according to claim 7, further comprising a step of dynamically changing the initial phase of the carrier signal at timing when a phase of the carrier signal in each submodule is equal to the initial phase.

9. The method of controlling a power conversion device according to claim 8, wherein the step of dynamically changing the initial phase includes a step of adding an adjustment value common among the submodules to an initial phase initially set for each of the submodules.

10. The method of controlling a power conversion device according to claim 8 or 9, wherein a common multiple of the first period and the second period is equal to an integer multiple of a period of voltage of the AC circuit.

11. The method of controlling a power conversion device according to claim 10, wherein
each of the step of dynamically changing the period and the step of dynamically changing the initial phase includes steps of:

generating a reset signal having a period equal to the integer multiple of the period of the AC circuit and synchronized with voltage of the AC circuit;
transmitting the reset signal as well as a command value for a period and a command value for an initial phase of the carrier signal to each submodule; and
setting, by each submodule, the period and the initial phase of the carrier signal in accordance with the command values, in response to the reset signal.

12. The method of controlling a power conversion device according to claim 11, wherein
the step of setting the period and the initial phase of the carrier signal in accordance with the command values includes:
a step of resetting the carrier signal in response to the reset signal when the received command value for the period and the received command value for the initial phase are held at previous values.

FIG.1

FIG.2

INPUT CONVERTER 50

S/H 51

MUX 52

A/D 53

CPU 54

59

ROM 56

RAM 55

INPUT/ OUTPUT I/F 57

AUXILIARY STORAGE DEVICE 58

3

FIG.3

Vdcp, Vdcn
Ipu, Ipv, Ipw
Inu, Inv, Inw

Vacu, Vacv, Vacw
Iacu, Iacv, Iacw

Vcap
Ipu, Ipv, Ipw
Inu, Inv, Inw

Vacu, Vacv, Vacw

60 DC VOLTAGE COMMAND GENERATION UNIT

61 AC VOLTAGE COMMAND GENERATION UNIT

62 CIRCULATING CURRENT COMMAND GENERATION UNIT

63 CAPACITOR VOLTAGE COMMAND GENERATION UNIT

64 ARM VOLTAGE COMMAND GENERATION UNIT

65 CARRIER CONTROL UNIT

3

VOLTAGE COMMAND VALUE
Vprefu
Vnrefu
Vprefv
Vnrefv
Vprefw
Vnrefw

CARRIER RESET SIGNAL CR_RST

CARRIER PERIOD COMMAND VALUE CR_PRD

CARRIER PHASE COMMAND VALUE CR_PHS

EP 4 542 842 A1

# FIG.4

FIG.5

FIG.6

| TARGET TO BE CHANGED | CARRIER PHASE COMMAND VALUE | CARRIER PHASE COMMAND VALUE |
|---|---|---|
| INITIAL SETTING | INITIAL VALUE OF PERIOD | INITIAL VALUE OF PHASE |
| NO CHANGE | HOLD PREVIOUS VALUE | HOLD PREVIOUS VALUE |
| ONLY CARRIER FREQUENCY | PERIOD VALUE TO CHANGE TO | HOLD PREVIOUS VALUE |
| ONLY CARRIER PHASE | HOLD PREVIOUS VALUE | PHASE VALUE TO ADD |
| CARRIER FREQUENCY+CARRIER PHASE | PERIOD VALUE TO CHANGE TO | PHASE VALUE TO ADD |

FIG.7

POWER SYSTEM (AC)

[VOLTAGE]

t1

t5

[TIME]

←AC SYSTEM PERIOD $\alpha$→

←————AC SYSTEM PERIOD $\alpha \times N$————→

REFERENCE SIGNAL OF
SYSTEM PERIOD × N

FIXED DELAY DR

CARRIER RESET SIGNAL
(RESET OFFSET A=0)

DR

t6

[SCALE]

t2

SM #1 PWM CARRIER

INITIAL PHASE=0

$\beta$

[TIME]

PWM CONTROL
CARRIER PERIOD $\beta$

[SCALE]

SM #2 PWM CARRIER

INITIAL PHASE=$\theta$

$\theta$

$\theta$

[TIME]

[SCALE]

SM #3 PWM CARRIER

INITIAL PHASE=$\theta \times 2$

$\theta \times 2$

$\theta \times 2$

[TIME]

EP 4 542 842 A1

# FIG.8

POWER SYSTEM (AC)

[VOLTAGE]

[TIME]

t1      t5

←AC SYSTEM PERIOD $\alpha$→

←———AC SYSTEM PERIOD $\alpha \times N$———→

REFERENCE SIGNAL OF
SYSTEM PERIOD × N

t2    RESET OFFSET A'(=A+$\beta$ × L, A=0, L=2)    RESET OFFSET A'

CARRIER RESET SIGNAL

DR    DR ←———AC SYSTEM PERIOD $\alpha \times N$———→

t4    FIXED DELAY DR   t8

CARRIER PERIOD
COMMAND VALUE

CARRIER PERIOD=$\beta$    CARRIER PERIOD=$\beta$'

[SCALE]    t3    t7

SM #1
PWM CARRIER

INITIAL PHASE=0   PWM
CONTROL
CARRIER
PERIOD $\beta$

PWM
CONTROL
CARRIER
PERIOD $\beta$'

$\beta$'   [TIME]

[SCALE]

SM #2
PWM CARRIER

INITIAL PHASE=$\theta$

$\theta$    $\theta$

[TIME]

# FIG.9

CARRIER RESET SIGNAL

FIXED DELAY DR    FIXED DELAY DR    FIXED DELAY DR

t1    t3    t5

ADJUSTMENT VALUE

ADJUSTMENT VALUE=0°    ADJUSTMENT VALUE=$\delta$    ADJUSTMENT VALUE=$\delta$ (HOLD PREVIOUS VALUE)

INITIAL PHASE VALUE $\gamma$

INITIAL PHASE=$\gamma$0 (30°)    INITIAL PHASE=$\gamma$0+$\delta$    INITIAL PHASE=$\gamma$0+$\delta$ (HOLD PREVIOUS VALUE)

[SCALE]

UNIT CONVERTER PWM CARRIER

[TIME]

t2    t4    t6

PWM CONTROL CARRIER PERIOD $\beta$

FIG.10

```
                          ┌──────────┐
                          │  START   │
                          └────┬─────┘
                               │
    ┌─────────────────────────▶│
    │                          │                         ╭─S100
    │         ┌────────────────▼──────────────────────┐
    │         │ CONTROL BRIDGE CIRCUIT IN EACH SUBMODULE │
    │         │ BY PHASE SHIFT PULSE WIDTH MODULATION   │
    │         │ USING CARRIER SIGNAL HAVING INITIAL PHASE │
    │         │ DIFFERENT FOR EACH SUBMODULE IN EACH ARM │
    │         │ AND PERIOD COMMON TO EACH SUBMODULE     │
    │         └────────────────┬──────────────────────┘
    │                          │                         ╭─S110
    │         ┌────────────────▼──────────────────────┐
    │         │ DYNAMICALLY CHANGE PERIOD OF CARRIER    │
    │         │ SIGNAL FROM FIRST PERIOD TO SECOND PERIOD │
    │         │ AT TIMING WHEN PHASE OF CARRIER SIGNAL IN │
    │         │ EACH SUBMODULE IS EQUAL TO INITIAL PHASE │
    │         └────────────────┬──────────────────────┘
    │                          │                         ╭─S120
    │         ┌────────────────▼──────────────────────┐
    │         │ DYNAMICALLY CHANGE INITIAL PHASE OF     │
    │         │ CARRIER SIGNAL AT TIMING WHEN PHASE OF   │
    │         │ CARRIER SIGNAL IN EACH SUBMODULE IS EQUAL │
    │         │ TO INITIAL PHASE                        │
    │         └────────────────┬──────────────────────┘
    │                          │
    └──────────────────────────┘
```

23

FIG.11

DYNAMIC CHANGE OF PERIOD AND
INITIAL PHASE OF CARRIER SIGNAL

START

S200

GENERATE RESET SIGNAL HAVING PERIDO EQUAL
TO INTEGER MULTIPLE OF PERIOD OF AC CIRCUIT
AND SYNCHRONIZED WITH VOLAGE OF AC CIRCUIT

S210

TRANSMIT RESET SIGNAL AS WELL AS PERIOD
COMMAND VALUE AND COMMAND VALUE FOR
INITIAL PHASE OF CARRIER SIGNAL

S220

IN RESPONSE TO RESET SIGNAL, EACH SUBMODULE
SETS PERIOD AND INITIAL PHASE OF CARRIER
SIGNAL IN ACCORDANCE WITH COMMAND VALUE

END

## INTERNATIONAL SEARCH REPORT

| International application No. |
|---|
| **PCT/JP2022/024562** |

**A. CLASSIFICATION OF SUBJECT MATTER**

*H02M 7/49*(2007.01)i
FI: H02M7/49

According to International Patent Classification (IPC) or to both national classification and IPC

**B. FIELDS SEARCHED**

Minimum documentation searched (classification system followed by classification symbols)

H02M7/49

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2006-109688 A (MEIDENSHA CORP.) 20 April 2006 (2006-04-20) entire text, all drawings | 1-12 |
| A | WO 2021/130911 A1 (MITSUBISHI ELECTRIC CORP.) 01 July 2021 (2021-07-01) entire text, all drawings | 1-12 |
| A | JP 2019-092333 A (TOSHIBA MITSUBISHI-ELECTRIC INDUSTRIAL SYSTEM CORP.) 13 June 2019 (2019-06-13) entire text, all drawings | 1-12 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **26 August 2022** | **06 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

| International application No. |
| --- |
| **PCT/JP2022/024562** |

| Patent document<br>cited in search report | | | Publication date<br>(day/month/year) | Patent family member(s) | Publication date<br>(day/month/year) |
| --- | --- | --- | --- | --- | --- |
| JP | 2006-109688 | A | 20 April 2006 | (Family: none) | |
| WO | 2021/130911 | A1 | 01 July 2021 | (Family: none) | |
| JP | 2019-092333 | A | 13 June 2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2021130911 A